# NEUE EUROPÄISCHE PATENTSCHRIFT

(11) **EP 1 979 716 B2**
(45) Veröffentlichungstag und Bekanntmachung des Hinweises auf die Entscheidung über den Einspruch: **02.08.2023**
(45) Hinweis auf die Patenterteilung: 13.07.2016
(21) Anmeldenummer: 07703196.1
(22) Anmeldetag: 01.02.2007
(51) Int. Cl.: G01D 5/14

(54) **MESSANORDNUNG MIT MAGNET**
MEASURING ARRANGEMENT COMPRISING A MAGNET
DISPOSITIF DE MESURE COMPRENANT UN AIMANT

(30) Priorität: 02.02.2006 DE 202006001807 U
(43) Veröffentlichungstag der Anmeldung: 15.10.2008
(73) Patentinhaber: Sensor-Technik Wiedemann GmbH, 87600 Kaufbeuren (DE)
(72) Erfinder: HORNUNG, Hans-Georg, 86875 Waal (DE); SIEBER, Michael, 87600 Kaufbeuren (DE)
(74) Vertreter: Patentanwälte Olbricht, Buchhold, Keulertz Partnerschaft mbB
(86) Internationale Anmeldenummer: PCT/EP2007/000867
(87) Internationale Veröffentlichungsnummer: WO 2007/088053

(56) Entgegenhaltungen:
- EP-A2- 0 174 914
- DE-A1- 10 160 904
- DE-A1- 19 726 084
- JP-A- H11 336 714
- US-A1- 2003 136 443

## Beschreibung

Die Erfindung betrifft einen Arbeitszylinder mit einer Messanordnung zum Messen der aktuellen Position eines Gegenstandes, zum Beispiel des Kolbens des Arbeitszylinders. In vielen Fällen des Maschinenbaus ist es interessant, die Positionsmessung direkt mit dem Zylinder zu koppeln und keine zusätzlichen externen Messgeräte einsetzen zu müssen. Ein häufiger Grund ist, dass externe Messgeräte bei den oft sehr rauhen Einsatzbedingungen leicht beschädigt werden könnten, ein anderer, dass eine serienmäßige Ausstattung von Arbeitszylindern mit der Messtechnik typischerweise günstiger in der Herstellung sind, als die Herstellung und Verarbeitung von getrennten Komponenten.

Es sind Druckspeicher bekannt, bei denen ein Kolben in einem Gehäuse auf und ab bewegt wird. Hallsensoren außerhalb des Gehäuses, die in einer Tasche angeordnet sind, die in den Kolbeninnenraum hineinragt, schalten, je nach Position des Kolbens, über ein elektrisches Modul einen Motor ein oder aus.

Eine Schwierigkeit dabei ist insbesondere, dass in beispielsweise Hydraulikzylindern relativ aggressive Öle und typischerweise große Drücke auftreten, die den Einsatz von Elektronik erschweren und, dass die Information über die Position durch eine druckfeste Wand durchgeführt werden muss. Auch muss die Elektronik im Inneren zudem irgendwie mit elektrischer Energie versorgt werden.

Die europäische Patentanmeldung EP 0 174 914 zeigt eine Vorrichtung zum Übersetzen einer Linearverschiebung in ein elektrisches Signal. Diese umfasst einen Stator 1 und einen beweglichen Rotor 2. Das eine Ende eines Kabels 5 ist dabei mit dem Rotor 2 und das andere Ende des Kabels 5 über eine Umlenkrolle 6 mit einer Sicherungsscheibe P verbunden, die an einem Schaft S eines Stoßdämpfers befestigt ist. Dieser Schaft S erstreckt sich in verschiebbarer Art und Weise durch den Stator 1 der Vorrichtung. Wenn sich der Stoßdämpfer verlängert, bewirkt das Kabel 5 eine Drehbewegung des Rotors 2 relativ zu dem Stator 1. Wenn der Stoßdämpfer dagegen zusammengedrückt wird, sorgt eine Spiralfeder 3 dafür, den Rotor 2 in die Gegenrichtung zurückzudrehen und das Kabel 5 wiederum auf den Rotor 2 aufzuwickeln. Die Position des Rotors 2 wird dabei über einen Magneten 30 und einen die Stellung dieses Magneten 30 detektierenden Sensor 50 aufgenommen.

Die US-Patentanmeldung US 2003/136443 zeigt ein System zum Erkennen einer Teileposition, mit einer Kabeltrommel 8, die unter VorSpannung einer Federbaugruppe 10 steht. Die Kabeltrommel 8 ist dabei auf einem Gewindebolzen 9 gelagert, sodass sich beim Auf- beziehungsweise Abrollen eines Kabels 11 eine Endfläche 12 der Kabeltrommel 8 gegenüber einer Endfläche 13 eines Sensors 14 bewegt. Aus dem Abstand X zwischen beiden Endflächen 12, 13 kann dabei die Länge des auf- beziehungsweise abgewickelten Kabels 11 bestimmt und so die Position eines mit dem Kabel 11 verbundenen Teils festgestellt werden. Der Abstand X wird dabei aus der jeweiligen Stärke des Feldes eines Magneten 16 abgeleitet.

Die europäische Patentanmeldung EP 1 589 322 A1 zeigt eine Vorrichtung zum Messen von Rotation in zwei Richtungen, wobei die Vorrichtung die Rotation eines Rotationsglieds detektieren kann, welches sich um Achsen drehen kann deren axiale Richtungen sich schneiden. Die Vorrichtung kann einfach in unterschiedliche Geräte eingebaut werden. Ein Magnet bewegt sich aufgrund von Bewegung oder Stellung eines Gegenstands und diese Bewegung wird von einem Sensor erfasst. Dabei ist zwischen dem Gegenstand und dem Magneten ein mechanischer Wandler vorgesehen. Zwischen Magnet und Sensor ist eine Trennwand vorgesehen.

Ausgehend von diesem Stand der Technik hat es sich die Erfindung zur Aufgabe gemacht, einen Arbeitszylinder mit einer Messanordnung vorzuschlagen.

Zur Lösung dieser Aufgabe geht die Erfindung aus von einem Arbeitszylinder gemäß Anspruch 1 einer Messanordnung, wobei sich ein Magnet aufgrund der Bewegung oder Stellung eines Gegenstandes bewegt oder positioniert und diese Bewegung beziehungsweise Positionierung des Magneten von einem Sensor erfasst wird. Zwischen Magnet und Sensor ist eine nicht magnetische Trennwand vorgesehen. Zwischen dem Gegenstand und dem Magnet ist ein mechanischer Wandler, insbesondere ein Getriebe angeordnet, wobei der mechanische Wandler als Seilzuganordnung mit einer Spannvorrichtung für das Seil ausgebildet ist.

Die Trennwand ist dabei die Begrenzungswand eines mit Druck beaufschlagten Innenraumes eines Arbeitszylinders. Die Magnetfeldlinien durchdringen die Trennwand und eine Änderung der Magnetfeldliniendichte oder der Stärke des Magnetfeldes, zum Beispiel durch die Bewegung oder Positionierung des Magneten, wird von einem zum Beispiel auf der Außenseite der Trennwand angeordneten Sensor entsprechend aufgenommen. Dabei wird die zu messende Größe in geeigneter Weise in eine Bewegung beziehungsweise Positionierung des Magneten umgesetzt. Ein Vorteil der Anordnung ist dabei, dass für den im Innenraum angeordneten Magneten keine Stromversorgung notwendig ist. Das heißt, die Begrenzungswand des Innenraumes bleibt deswegen unversehrt. Da der Sensor auf der Außenseite der Trennwand angeordnet ist, werden auch durch die entsprechenden Sensorleitungen die Trennwand nicht verletzt. Günstigerweise wird ein nicht magnetisierbares Material für die Trennwand vorgesehen, damit nicht der Messvorgang durch ein sich aufmagnetisierendes Trennwandmaterial verfälscht wird.

Im Gegensatz zum Stand der Technik ist mit der Erfindung nicht eine reine Schaltanordnung, sondern eine Messanordnung vorgesehen, anhand der die Stellung eines Gegenstandes im Verhältnis zu einem Sensor gemessen wird. Die Erfindung erlaubt es nunmehr, eine Positionsbestimmung des Gegenstandes durchzuführen. Diese Positionsbestimmung erfolgt stufenlos. Darüber hinaus erlaubt die Erfindung aber auch die Bewegung des Gegenstandes zu bestimmen, also zum Beispiel seine örtliche Positionsänderung in einem Zeitintervall, also seine Geschwindigkeit. Die Erfindung ermöglicht es sogar, die Geschwindigkeit des Gegenstandes in Abhängigkeit seiner jeweiligen Position zu bestimmen. Somit sind auch theoretisch Beschleunigungsmessungen mit der Erfindung möglich.

Nach der Erfindung ist insbesondere nur ein Sensor vorgesehen, mit dessen Hilfe sich die Lage des Gegenstandes bestimmen lässt. Dieser Sensor misst kontinuierlich die Veränderung der Magnetfeldstärke, die sich durch die veränderte Lage des Magneten im Verhältnis zum Sensor ergibt. Die Erfindung ist auf den Einsatz eines Sensors nicht beschränkt. Grundsätzlich ist es möglich, nach einer weiteren, ebenfalls erfindungsgemäßen Anordnung mehrerer Sensoren, gegebenenfalls auch in Kombination mit mehreren bewegten Magneten, die Positionsbestimmung beziehungsweise die Datenerfassung noch genauer zu gestalten.

Für eine platzsparende Anordnung der Messanordnung ist ein mechanischer Wandler vorgesehen, der die Bewegung des Gegenstandes auf den Magneten überträgt. Mit einem derartigen Wandler lässt sich die Bewegung des Gegenstandes in eine andere Richtung beziehungsweise eine linare Bewegung entlang einer ersten Achse in eine lineare Bewegung entlang einer zweiten Achse, die gegenüber der ersten Achse verschwenkt angeordnet ist, umlenken.

Es lässt sich auch eine lineare Bewegung in eine Drehbewegung oder umgekehrt eine Drehbewegung in eine lineare Bewegung umändern. Außerdem ist mit einem mechanischen Wandler ebenfalls eine Unter- oder Übersetzung der Bewegung erzielbar, sodass beispielsweise eine kleine Bewegung des Gegenstandes zu einer größeren Bewegung des Magneten führt. Auf diese Weise lässt sich die Messgenauigkeit erhöhen, da eine große Magnetfeldänderung am Sensor zu einem größeren elektrischen Ausgangssignal führt. Umgekehrt kann eine große Lageveränderung des Gegenstandes, die gegebenenfalls größer ist als die Abmessungen des Sensors beziehungsweise dessen wirksame Länge, derart untersetzt werden, dass sie vom Sensor noch erfasst werden kann.

Mittels eines mechanischen Wandlers - wie mit der Erfindung vorgeschlagen wird - ist die Messanordnung sehr variabel einsetzbar. Sie kann sowohl in Räumen mit großen als auch mit sehr kleinen Abmessungen eingesetzt werden. Die Messanordnung ist sehr platzsparend einsetzbar.

Insbesondere ist die Messanordnung dazu vorgesehen, eine Länge, eine Distanz oder einen Abstand beziehungsweise die Veränderung der Länge, der Distanz oder des Abstandes zu messen. Ausgehend von einer Grundposition, die als 0 bezeichnet wird, wird die Veränderung der Lage eines Gegenstandes gemessen. Beispielsweise ist die Lage eines Kolbens in einem Arbeitszylinder von einem oberen Totpunkt zum unteren Totpunkt zu bestimmen, wobei jedoch auch sämtliche Lagen des Kolbens zwischen oberen und unteren Totpunkt gemessen werden können. Zu diesem Zweck ist der Kolben beispielsweise mit einem Magneten verbunden, wobei die Veränderung der Lage des Kolbens auch die Lage oder Stellung des Magneten proportional verändert. Die Veränderung der Stärke der Magnetfeldlinien wird von einem Sensor gemessen, der den gemessenen Wert elektrisch auf eine Anzeige oder Auswerteeinheit überträgt.

Zur Messung der Stellung des Magneten sind beispielsweise induktive oder magnetische Näherungsschalter vorgesehen. Als magnetische Näherungsschalter eignen sich insbesondere Reed-Schalter oder Hall-Sensoren, wobei im Gegensatz zum Reed-Schalter, der je nach Lage des Magneten einen Stromkreis öffnet oder schließt, der Hall-Sensor die Veränderung des Magnetfeldes kontinuierlich anzeigt.

Der Sensor kann auf der dem Magneten abgewandten Seite der Trennwand als diskretes Bauteil zum Beispiel in einem eigenen Gehäuse angeordnet sein. Nach einer weiteren Variante der Erfindung ist vorgesehen den Sensor direkt auf die Außenseite der Trennwand aufzukleben.

Den Sensor mit einer Klebetechnik an der Trennwand des Gehäuses zu befestigen, ist eine sehr einfache und preiswerte Fertigungsmethode. Es ist jedoch auch möglich, den Sensor in einer Aussparung, die mit Hinterschneidungen versehen ist, einzusetzen. Des Weiteren kann der Sensor mit Krampen am Gehäuse oder der Trennwand befestigt sein. Dies ist nur eine kleine Aufzählung von Befestigungsmöglichkeiten des Sensors. Weitere Befestigungsmöglichkeiten, die hier nicht aufgeführt sind, fallen ebenfalls unter den Erfindungsgedanken.

Nach einer weiteren Variante ist vorgesehen den Sensor in Dünnschichttechnologie auf der Außenseite der Trennwand aufzubringen, wobei der Sensor durch Aufdampfen, Sputtern, Ionenplattieren oder sonstige bekannte Techniken zum Aufbringen von Dünnschichten auf die Außenseite der Trennwand aufgebracht wird.

Das Aufbringen des Sensors in Dünnschichttechnologie hat den Vorteil, dass der Sensor mit dem Gehäuse beziehungsweise der Trennwand unlösbar verbunden ist. Es ist eine zuverlässige und in der Herstellung einfache Befestigungsmöglichkeit eines Sensors an einem Gegenstand.

Zum einen kann das Gehäuse, an dem der Sensor angeordnet ist, selbst aus einem nicht magnetischen Material bestehen. Hierzu ist vorteilhafterweise Aluminium vorgesehen, jedoch eignen sich auch andere nicht magnetische Materialien, wie nicht magnetische Metalle, weitere nicht magnetische Materialien oder auch Kunststoffe.

Nach einer weiteren Ausführung der Erfindung ist vorgesehen, das Gehäuse, in dem die Messanordnung angeordnet ist, aus einem nicht magnetischen Material herzustellen.

Es ist dabei vorgesehen, dass sowohl eine Dreh- wie auch eine Linearbewegung des Magneten einsetzbar ist. Die zu messende Größe wird dabei durch einen mechanischen Wandler, beispielsweise ein Getriebe in eine Dreh- beziehungsweise Longitudinal- oder Linearbewegung des Magneten umgesetzt. Der Vorteil des Einsatzes einer Drehbewegung liegt insbesondere darin, dass eine solche Ausgestaltung platzsparender ist, da bei einer Mehrfachdrehung des Magneten kein zusätzlicher Platzbedarf notwendig ist, aber ein großer Messbereich besteht.

In der Erfindung wird ein sogenannter Seilzugsensor eingesetzt. Dieser Seilzugsensor besteht dabei aus einer Seilzuganordnung, wobei das Seil dieser Seilzuganordnung mit einem Ende mit dem Gegenstand, dessen Lage zu bestimmen ist, verbunden ist, und das zweite Seilende den Magnet bewegt beziehungsweise positioniert. Zur Bestimmung der Lage eines Gegenstandes ist es natürlich auch möglich, den Abstand oder die Distanz dieses Gegenstandes von einem Referenzpunkt zu bestimmen. Die Änderung der wirksamen Seillänge wird direkt oder unter Einschaltung eines Unter- oder Übersetzungsgetriebes auf die Bewegung des Magneten umgesetzt. Ohne den zugehörigen mechanisch-elektronischen Signalwandler ist deren Einsatz im Inneren von Hydraulikzylindern möglich, weil sie aus Materialien hergestellt werden können, die genügend beständig sind gegen die Öle und gegen den Druck und weil sie keine (oder nur geringste) zusätzliche Energie für ihren Betrieb brauchen. Um die Positionsinformation nun aus dem druckbeaufschlagten Raum nach außen zu übertragen, wird auf die Signalachse des Seilzugsensors, die normalerweise direkt den mechanisch-elektronischen Signalwandler betätigt, ein Magnet befestigt und dessen Feld durch ein entsprechend dünnes, aber druckdichtes Wandstück der Trennwand aus nicht-magnetisierbarem Material von außerhalb des druckbeaufschlagten Raumes erfasst und ausgewertet.

Die erfindungsgemäße Lösung zeichnet sich dadurch aus, dass sie die Positionsinformation ohne eine druckdichte Drehdurchführung oder eine druckdichte Kabeldurchführung oder eine berührungslose elektromagnetische Energie- und Signalübertragung aus dem druckbeaufschlagten Raum nach außen überträgt, dass die genaue Erfassung der Magnetdrehposition mit am Markt verfügbaren Magnetfeldsensoren problemlos möglich ist und dass die Komponenten im Inneren den besonderen Bedingungen der Hydraulik leicht standhalten.

Um bei diesem Verfahren die Messauflösung zu erhöhen, können Seilzugsensoren mit mehreren Umdrehungen der Achse für die gesamte Messlänge benutzt werden und die Umdrehungen mit gezählt werden. Dies hat den Nachteil, dass die absolute Position nicht direkt erfasst werden kann, sondern nur Änderungen, die aber mit wenig Aufwand. Statt Seilzugsensoren mit einer Achse können solche mit mehreren Achsen, entsprechend mehreren Magneten und entsprechend mehreren Magnetdrehpositionssensoren verwendet werden, so dass die Stellung der einzelnen Achsen der Untersetzung der Aufrollmechanik jede für sich absolut erfasst werden kann und damit, wie bei einer konventionellen mechanischen Uhr, eine sehr hohe Auflösung für eine große Messspanne möglich ist.

Neben der gerade beschriebenen Ausführung, zur Bewegung des Sensors eine Seilzuganordnung insbesondere als mechanischer Wandler zu verwenden, ist ebenfalls ein Flaschenzug, eine Umlenkanordnung, eine Teleskopstange, eine Hebelanordnung oder eine Kombination aus zwei beziehungsweise mehreren der genannten Mittel vorgesehen. Die eben beschriebene Seilzuganordnung wirkt über ein Getriebe, um die Bewegung des Gegenstandes mit einer Über- oder Untersetzung auf die Bewegung des Magneten zu übertragen. Das Getriebe kann aus einem Zahnradgetriebe bestehen, das eine einfache Über- oder Untersetzung der Bewegung des Gegenstandes auf die Bewegung des Magneten bewirkt. Das Zahnradgetriebe selbst kann jedoch auch ein Umlenken der linearen Bewegung in eine Rotationsbewegung mit gleichzeitiger Über- oder Untersetzung oder auch ohne bewirken.

Nach einer weiteren Ausführung ist eine Teleskopstange vorgesehen, die die lineare Bewegung des Gegenstandes in eine Linearbewegung des Magneten überträgt. Der teleskopierte Hub bewirkt eine Über- oder Untersetzung.

Nach einer weiteren Anordnung ist eine Stange mit einer Verzahnung versehen, sodass die Verzahnung beispielsweise über ein Kegelrad den Magneten in eine Drehbewegung versetzt. Der Flaschenzug ist ebenfalls als Übersetzungsgetriebe geeignet. Eine große Lageveränderung des Gegenstandes führt je nach Anzahl der Flaschen zu einer geringeren Lageveränderung des Magneten, oder bei umgekehrter Anordnung des Flaschenzuges eine geringe Lageveränderung des Gegenstandes zu einer großen Lageveränderung des Magneten. Des Weiteren sind Hebelanordnungen zur Umsetzung der Bewegung des Gegenstandes auf die Bewegung des Magneten vorgesehen.

Bei dem zuvor beschriebenen Seilzugsensor ist vorgesehen, dass die Messanordnung rechtwinklig zur Bewegung des zu messenden Gegenstandes angeordnet ist. Über den Seilzug wird eine Welle in Bewegung versetzt, deren Achsrichtung winklig zur Bewegungsrichtung des Gegenstandes steht.

Nach einer weiteren Ausführungsform der Erfindung jedoch ist vorgesehen, die Messanordnung in einer Linie fluchtend zur Bewegungsrichtung des Gegenstandes anzuordnen. Zu diesem Zweck wird beispielsweise das Seil des Seilzugsensors über eine Umlenkrolle oder ein sonstiges Umlenkelement (z. B. eine Welle oder Öse oder dergleichen) umgelenkt, sodass die Achse der Welle parallel zur Bewegungsrichtung des Gegenstandes orientiert ist. Bei der Ausführung der Erfindung, die Messanordnung in den Zylinder eines Arbeitszylinders anzuordnen, ist an der Stirnseite des Arbeitszylinders die aus nicht magnetischem Material bestehende Trennwand vorgesehen. Hinter dieser Trennwand, im Inneren des Zylinders, ist die Vorrichtung vorgesehen, die den Magneten in Drehbewegung versetzt.

Dies kann über die beschriebenen mechanischen Wandler, beispielsweise eines aus mehreren Zahnrädern bestehenden Getriebes, das die Bewegungsrichtung des Gegenstandes in eine Drehbewegung versetzt, über Seilzuganordnungen, Umlenk- oder Hebelanordnungen geschehen. Die einfachste Ausführung ist die Seilzuganordnung, unter die auch die zuvor beschriebene Flaschenzuganordnung fällt, bei der das mit dem Kolben verbunden Seil über eine Umlenkrolle der Umlenkanordnung geführt ist. Das Umlenkelement beziehungsweise die Umlenkrolle ist vorteilhafterweise außerhalb des Zentrums des Zylinders vorgesehen, sodass die Achse der Welle, die den Magneten in Drehbewegung versetzt, mit der Achse des Zylinders zusammenfällt. Nach einer weiteren Ausführung ist jedoch die Messanordnung selbst exzentrisch an der Stirnseite des Zylinders angeordnet, wobei hier gegebenenfalls die Achse der Umlenkrolle rechtwinklig zur Längsachse des Arbeitszylinders angeordnet ist und der Mittelpunkt der Umlenkrolle auf der Längsachse des Zylinders liegt.

Vorteilhafterweise ist die erfindungsgemäße Messanordnung mit einem Gewinde versehen. Auf diese Weise kann die Messanordnung als vorgefertigte Baugruppe in eine Vorrichtung eingeschraubt werden.

Insbesondere ist die Messanordnung zum Messen der Position des Kolbens in einem Arbeitszylinder vorgesehen, wobei die Messanordnung aus einem mechanischen Wandler besteht. Dieser mechanische Wandler besteht, wie zuvor beschrieben, aus einem Getriebe als Über- oder Untersetzungsgetriebe, als Seilzuganordnung, wobei die Übertragung des Seilzugs im Verhältnis 1:1 vorgesehen ist, als Flaschenzuganordnung, wobei hier ein Über- oder Untersetzungsverhältnis vorgesehen ist, als Umlenkanordnung, das die lineare Bewegung in eine Bewegung, die von der Bewegungsrichtung des Gegenstandes abweicht, überträgt. Des Weiteren kann eine Teleskopstange vorgesehen sein, die die Bewegung des Gegenstandes zur Bewegung des Magneten führt. Ebenfalls ist eine Hebelanordnung vorgesehen, wodurch die Bewegung des Gegenstandes auf den Magneten übertragen wird.
Nach einer bevorzugten Ausführungsform wird die lineare Bewegung des Kolbens in eine Drehbewegung des Magneten übertragen. Diese Drehbewegung bewirkt eine Veränderung des magnetischen Feldes gegenüber der Lage eines außerhalb des druckbeaufschlagten Raumes angeordneten magnetfeldrichtungsempfindlichen Sensors. Um das Magnetfeld nicht zu beeinträchtigen, ist das Gehäuse, das den mechanischen Wandler und den Magneten umgibt, aus einem nicht magnetisierbaren Material hergestellt, wobei insbesondere im Bereich des Magneten und des auf der Außenseite angeordneten Sensors gegenüber der übrigen Wandung des Gehäuses dünner ausgebildet ist. Nach einer weiteren Ausführungsform jedoch ist vorgesehen, das Gehäuse aus einem Material wie Eisen, das magnetisierbar ist, auszubilden. Zumindest jedoch ist der Bereich, in dem der Magnet und Sensor angeordnet sind aus einer nicht magnetisierbaren Trennwand ausgebildet. Die (nichtmagnetisierbare) Trennwand ist derart in der Außenwand des Gehäuses angeordnet, dass sie gegebenenfalls auch hohen Drücken standhält.

Die Erfindung umfasst einen Arbeitszylinder, der als Hubzylinder vorgesehen ist, der eine solche Messanordnung, wie beschrieben, besitzt. Dabei wird günstigerweise vorgesehen, dass der Arbeitszylinder als hydraulisch oder pneumatisch wirkender Arbeitszylinder realisiert ist, wobei die im Inneren des Arbeitszylinders vorgesehenen Teile der Messanordnung vorteilhafterweise auch resistent sind gegen hohe Drücke oder Temperaturen oder aggressive Druckmedien.

Als Arbeitszylinder ist ein hydraulisch oder pneumatisch wirkender Arbeitszylinder vorgesehen. Dieser Arbeitszylinder weist in seinem Inneren einen hohen Druck auf. Insbesondere das Hydrauliköl in einem Hydraulikzylinder ist relativ agressiv. Eine einfache mechanische Übertragung der Bewegung des Kolbens auf einen Magneten, sei es in eine lineare oder rotatorische Bewegung, wird durch das agressive Öl nicht beeinträchtigt. Der Arbeitszylinder selbst kann aus einem nicht magnetisierbaren Material bestehen, wobei die vom Magneten ausgehenden Feldlinien die Trennwand ungehindert durchdringen.

Nach einem weiteren Ausführungsbeispiel ist jedoch ein Arbeitszylinder aus einem magnetisierbaren Material vorgesehen. In diesem Fall ist zumindest der Bereich, in dem sich Magnet und Sensor gegenüberliegen, eine Trennwand aus nicht magnetisierbaren Material angeordnet. Auf diese Weise wird vermieden, dass das magnetische Feld gestört wird.

Nach einer Ausführung ist die Trennwand im Zylinderboden, nach einer weiteren Ausführung in der Seitenwand angeordnet. Bei der Anordnung der Trennwand in der Zylinderseitenwand ist die Welle, auf die der Seilzug aufwickelbar ist, senkrecht zur Bewegungsrichtung des Kolbens angeordnet. Die Welle verwandelt die lineare Bewegung des Kolbens in eine Drehbewegung des Magneten.

Eine Spannvorrichtung bewirkt, dass das Seil ständig gespannt ist. Diese Spannvorrichtung besteht beispielsweise aus einer Spiralfeder, die auf die Welle ein Drehmoment ausübt, das entgegen der Drehung der Welle, die durch Zug am Seil hervorgerufen wird, wirkt. Nähert sich der Kolben der Welle bewirkt die Spiralfeder, dass das Seil auf die Welle aufgewickelt wird. Eine Bewegung des Kolbens entgegen dieser Richtung bewirkt ein Abwickeln des Seils von der Welle entgegen der Federkraft der Spiralfeder.

Bei Anordnung der Trennwand an der Stirnseite des Arbeitszylinders ist die Achse der Welle und die Bewegungsrichtung des Kolbens parallel zueinander angeordnet. Um die Welle in Drehbewegung versetzen zu können, ist eine Umlenkanordnung vorgesehen. Diese Umlenkanordnung besteht beispielsweise aus einer Umlenkrolle, über die das Seil die Welle in Drehbewegung versetzt. Die Achse der Welle und die Längsachse des Arbeitszylinders können nach einem Ausführungsbeispiel der Erfindung zueinander fluchten. Nach einem weiteren Ausführungsbeispiel sind die beiden Achsen versetzt zueinander angeordnet.

Weitere vorteilhafte Ausgestaltungen sind Gegenstand der Unteransprüche. In der Zeichnung ist die Erfindung schematisch dargestellt.

Es zeigen:
- Fig. 1 und Fig. 4:: je in einer Seitenansicht eine Variante des erfindungsgemäßen Arbeitszylinders unter Verwendung der erfindungsgemäßen Messanordnung;
- Fig. 2, 3, 5:: je in einem Detail verschiedene Realisierungsvarianten der erfindungsgemäßen Messanordnung.

Der Arbeitszylinder 3 besteht aus einer Zylinderwand 36, auf deren Innenseite ein Kolben 2 bewegbar (siehe Doppelpfeil 45) geführt ist. Der Kolben 2 trägt an seinem vorderen Ende eine Kolbenstange 20, die durch eine Bohrung im Deckel 32 aus dem Arbeitszylinder 3 herausragt und hier auch geführt ist. Auf der der Kolbenstange 20 abgewandten Seite des Kolbens 2 befindet sich der druckbeaufschlagbare Raum 30. Der Anschlussstutzen für das Einleiten des unter Druck setzbaren Mediums, aufgrund dessen der Kolben 2 bewegt wird, ist der Übersichtlichkeit halber nicht gezeigt.

Die Erfindung ist hier an einem einseitig wirkenden Arbeitszylinder 3 gezeigt. Dies beschränkt die Erfindung nicht auf diesen Anwendungsfall. Die Erfindung ist in gleicher Weise natürlich auch bei zweiseitig betriebenen Arbeitszylindern einsetzbar.

An der Unterseite ist der Arbeitszylinder 3 durch den Zylinderabschluss, der auch den Zylinderboden 34 bildet, verschlossen. Es ist klar, dass in dem Raum 30 ein erheblicher Druck aufgebaut wird, weswegen auf eine entsprechende Dichtheit des Zylinders zu achten ist.

In verschiedenen Anwendungen interessiert jetzt zum Beispiel die tatsächliche Position des Kolbens 2, also seine Lage. Aus Kenntnis der Länge der Kolbenstange 20 lässt sich dann auch zum Beispiel auf die Stellung eines entsprechenden, durch den Arbeitszylinder betätigten Elementes schließen.

Zur Ermittlung dieser Länge, oder des Abstandes des Kolbens 2 von dem oberen Rand des Zylinderbodens 34 wird nun vorgeschlagen, dass ein Magnet 10 aufgrund der zu messenden Größe bewegt beziehungsweise positioniert wird und diese Bewegung beziehungsweise Positionierung von einem Sensor 11 erfasst wird. Dadurch ist es möglich, wenn sich zum Beispiel der Kolben 2 bei einer Startstellung am oberen Rand des Zylinderbodens 34 befindet, den Hub h des Kolbens 2 zu messen. Dies kann zum Beispiel durch Zählen der Rotationen des Magneten 10 (wie bei einem Schrittmotor) oder durch Bestimmung der Magnetfeldstärke erfolgen. Es ist dabei möglich, sowohl die relative Lageveränderung, zum Beispiel durch Bewegung des Magneten (Drehen oder Linearbewegung), als auch die absolute Position durch Messung des Magnetfeldes zu bestimmen. Hierzu ist an dem Kolben 2 das Ende eines Seiles 40 angeschlossen. Das Seil 40 ist Teil einer Seilzuganordnung, das andere Seilende wird auf eine Welle 41 auf- oder abgewickelt, je nach Bewegungsrichtung des Kolbens 2. Die Welle 41 ist um ihre Achse drehbar in einem Getriebe 4 gelagert. Das Getriebe 4 trägt an seiner Abtriebsseite einen Magneten 10, der aufgrund der Bewegung des Kolbens 2 in eine Rotation versetzt wird. Die Rotation des Magneten 10 führt zu einer Änderung der Magnetfeldlinien, die von einem auf der Außenseite des Arbeitszylinders 3 angeordneten Sensor 11 aufgenommen werden. Auch befindet sich auf der Außenseite die zusätzliche Auswertelektronik, die zum Beispiel die anguläre Stellung des Magneten 10 oder auch die Anzahl der Umdrehungen des Magneten 10 bestimmt und auswertet. Hieraus wird dann zurückgerechnet, welcher Hublänge h dies entspricht.

Dabei ist die Erfindung nicht darauf festgelegt, dass diese nur im dynamischen Bereich funktioniert. Bei entsprechend sensitiver Ausgestaltung ist es auch möglich, eine absolute Messung, also nicht durch ein Zurückfahren des Kolbens 2 auf seine Ausgangslage, am Zylinderboden 34 vorzunehmen.

Vorteilhaft ist dabei, dass zwischen dem Magnet 10 und dem Sensor 11 eine druckdichte und bevorzugt nicht magnetisierbare Trennwand 33 vorgesehen ist. Die Trennwand 33 ist dabei zum Beispiel einstückig aus der Zylinderseitenwand oder dem Zylinderboden herausgearbeitet oder aber als separates Bauteil in eine entsprechende Ausnehmung eingesetzt und zum Beispiel dicht verschweißt oder verklebt oder sonst in geeigneter Weise verbunden.

Der Zylinderboden 34 weist in der hier dargestellten Variante eine gewisse Höhe auf. Es ist eine Tasche 37 in dem Zylinderboden 34 vorgesehen, in welche das Getriebe 4, welches die das Seil 40 aufnehmende Welle 41 trägt, hineinragt. Das Getriebe 4 ist einer Ausnehmung 38 in der Seitenwand 35 des Zylinderbodens 34 auf der Innenseite, welche zur Tasche 37 hin gerichtet ist, eingesetzt. Diese Ausnehmung 38 wird begrenzt durch die Trennwand 33. In geeigneter Weise ist zwischen Getriebe 4 und Trennwand 33 der Magnet 10 angeordnet und zwar derart, dass dieser aufgrund der Stellung des Kolbens 2 im Arbeitszylinder 3 zunächst bewegt beziehungsweise hernach positioniert wird und diese Bewegung beziehungsweise Positionierung von dem auf der Außenseite, der Tasche 37 abgewandten Seite, der Trennwand 33 angeordneten Sensor 11 aufgenommen und detektiert wird.

In dem hier gezeigten Ausführungsbeispiel ist die Achse A der Welle 41 rechtwinklig orientiert zur Kolbenstange 20. Dadurch entstehen keine wesentlichen Probleme beim Auf- und Abwickeln des Seiles 40 auf die Welle 41, günstigerweise wird das Seil 40 beim Herausdrücken des Kolbens 2 gegen die Kraft einer nicht dargestellten Feder von der Welle 41 abgezogen.

Anstelle der Ausgestaltung wie hier gezeigt, wo das Getriebe 4 in einen entsprechend dickeren Zylinderboden 34 eingebaut ist, ist es natürlich auch möglich, die Trennwand 33 tatsächlich in der Zylinderwand 36 anzuordnen. Die eine wie die andere Variante haben Vorteile bei der Herstellung eines solchen Zylinders.

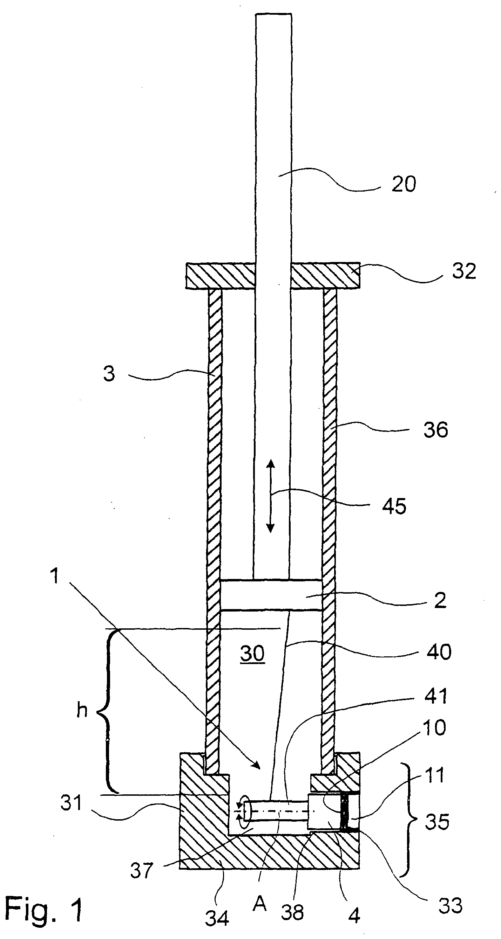

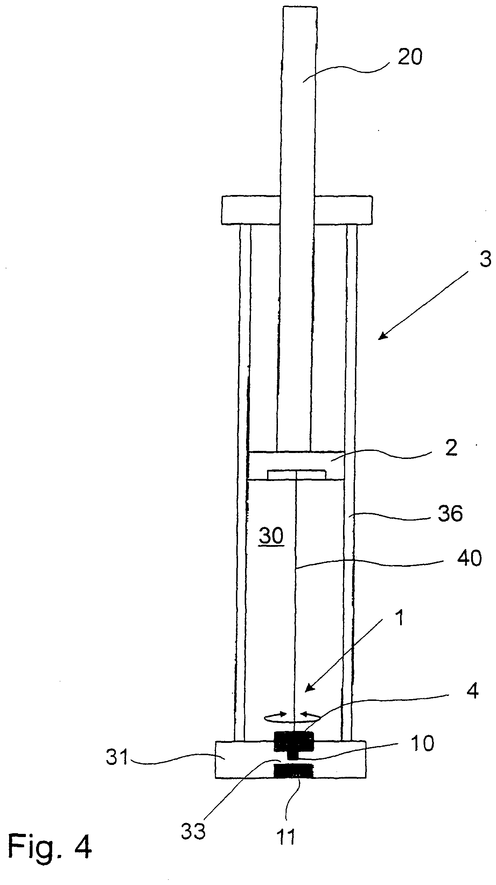

Die Variante nach Fig. 4 ist so ausgebildet, dass die Welle des Getriebes 4 parallel angeordnet ist zur Längserstreckung der Kolbenstange 20. Während sich bei Fig. 1 der Sensor an der Seite, in der Verlängerung der Zylinderwand 36 befindet, ist er in der Ausgestaltung nach Fig. 4 auf der Unterseite des Zylinderabschlusses 31 beziehungsweise im Zylinderboden 34 vorgesehen.

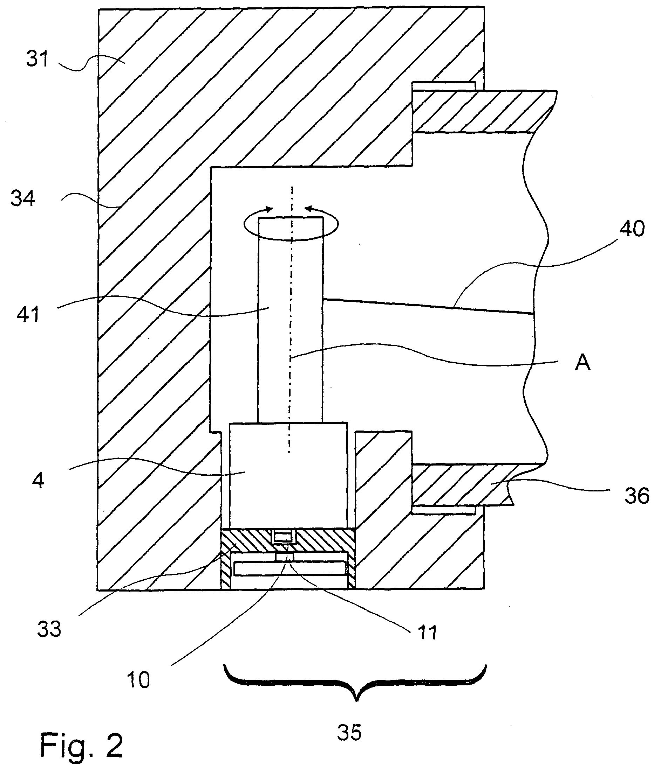

In Fig. 2 ist die Variante nach Fig. 1 in einem vergrößerten Detail gezeigt. Das Seil 40 wird auf die zur Kolbenstange 20 rechtwinklig orientierte Welle 41 auf- und abgewickelt. Dadurch wird die Welle 41 in Rotation versetzt und auch die Lage des Magneten 10 verändert sich. Dies wird von dem Sensor 11 detektiert. Die ganze Anordnung ist in der Seitenwand 35 des Zylinderabschlusses 31 eingebaut. Mittels einer Spiralfeder, die entgegen der Zugkraft des Kolbens 2 wirkt, wird das Seil 40 unter Spannung gehalten.

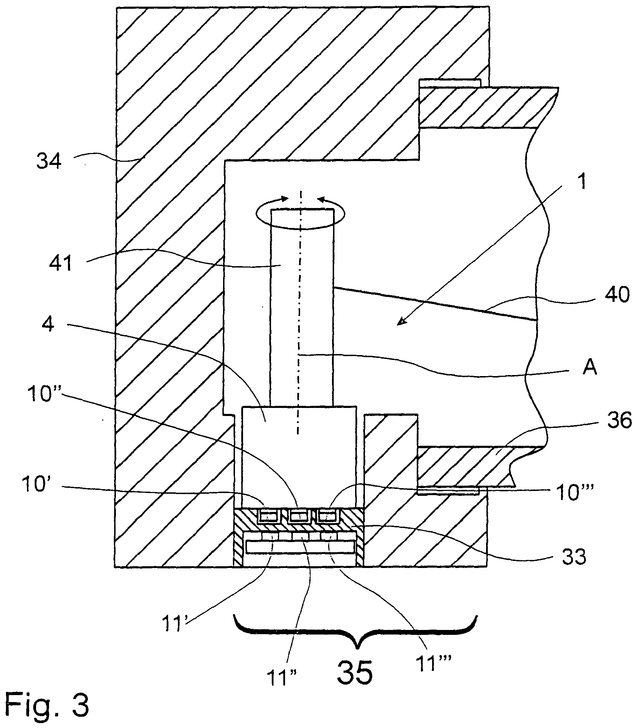

Die in Fig. 3 gezeigte Variante ist mit der in Fig. 2 weitestgehend identisch. Allerdings wird hier abtriebsseitig in dem Getriebe 4 nicht ein Magnet 10, sondern insgesamt drei Magneten 10', 10" und 10"' entsprechend bewegt beziehungsweise positioniert. Die Magnete 10', 10" und 10"' wirken dabei zusammen mit insgesamt drei Magnetdreh-Positionssensoren 11', 11" und 11"', so dass die Stellung der einzelnen Achsen der Untersetzung der Aufrollmechanik jede für sich absolut erfasst werden können und so eine sehr hohe Auflösung für einen großen Messbereich möglich ist.

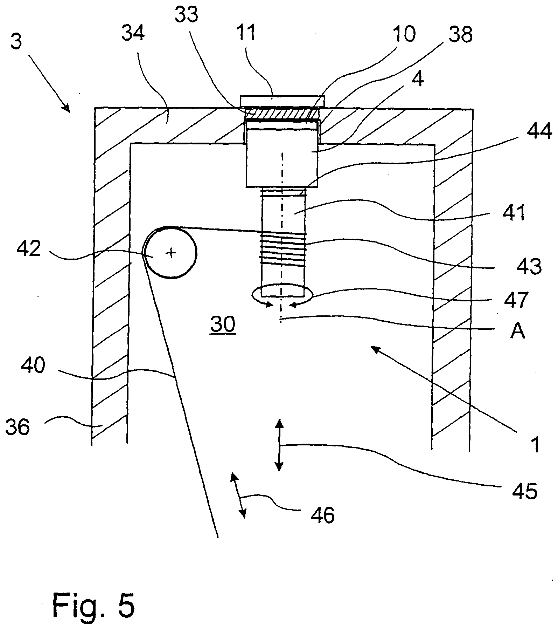

In Fig. 5 ist eine Messanordnung 1 dargestellt, die im Zylinderboden 34 des Arbeitszylinders 3 angeordnet ist. Die Achse A der Welle 41 fällt nach diesem Ausführungsbeispiel mit der Längsachse des Arbeitszylinders 3 zusammen. Im Boden 34 des Arbeitszylinders 3 ist eine Bohrung vorgesehen. In dieser Bohrung ist die aus nicht magnetisierbaren Material bestehende Trennwand 33 eingesetzt. Die Befestigung der Trennwand 33 erfolgt derart, dass sie dem hohen Druck, der im Arbeitszylinder besteht, standhalten kann.

Die Wandstärke der Trennwand 33 ist geringer als die Wandstärke des Zylinderbodens 34. In der im Zylinderboden 34 bestehenden Aussparung 38 ist das Getriebe 4 eingesetzt, das dazu dient, die Drehbewegung der Welle 41 zur über- oder untersetzen und diese Drehbewegung auf den Magneten 10 zu übertragen. Die magnetischen Feldlinien des Magneten 10 werden von dem Sensor 11 gemessen und an eine Anzeige oder dergleichen übertragen. An der Welle 41 ist eine Spannvorrichtung 44 vorgesehen, die in diesem Ausführungsbeispiel als Spiralfeder ausgebildet ist. Diese Spannvorrichtung 44 bewirkt, dass das Seil 40 zwischen Welle 41 und Kolben 2 stetig gespannt ist.

Der in diesem Ausführungsbeispiel bewegliche Kolben (nicht dargestellt) bewegt sich in Richtung des Doppelpfeils 45 auf den Sensor 11 zu beziehungsweise von diesem weg. Über eine Seilzuganordnung bestehend aus einem Seil 40 und einer Umlenkrolle 42 wird diese Bewegung entlang der Längsachse des Arbeitszylinders 3 umgelenkt. Auf diese Weise ist es möglich, eine lineare Bewegung in eine Drehbewegung dadurch umzusetzen, dass das Seilende mit einer Welle 41 verbunden ist, wobei die Längsachse der Welle 41 parallel zur Längsachse des Arbeitszylinders 3 beziehungsweise zur Bewegungsrichtung 45 des Kolbens ausgerichtet ist. Bewegt sich der Kolben auf den Sensor 11 zu, wird das Seil 40 dadurch verkürzt, dass es auf der Welle 41 aufgewickelt wird. Eine Spannvorrichtung 44 bewirkt die Drehbewegung der Welle. Gleichzeitig mit der Welle 41 wird über eine Getriebe 4 der Sensor 11 in eine Rotationsbewegung 47 versetzt. Dadurch verändert sich das Magnetfeld. Diese Änderung wird von dem Sensor 11 erfasst und an eine Anzeigevorrichtung weitergeleitet.

Durch Zug an dem Kolben wird diese Bewegung auf das Seil 40 entlang des Pfeiles 46 übertragen, wobei das Seil 40, das mit der Welle 41 in Verbindung steht, von der Rolle entgegen der (Feder-)Kraft der Spannvorrichtung 44 abgewickelt wird. Nun wird auf dem Magneten 10 eine Drehbewegung 47 in entgegengesetzte Richtung eingeprägt. Wiederum verändert sich das Magnetfeld, das von dem Sensor 11 erfasst wird. Mit dieser Anordnung ist eine sehr platzsparende Vorrichtung der Messanordnung vorgesehen, die in geschlossenen Räumen, beispielsweise die eines Arbeitszylinders, vorgesehen ist.

Durch ein entsprechend ausgebildeten Sensor 11 ist es möglich, auch die Drehrichtung des Magneten 10 zu detektieren, wodurch auch die Bewegungsrichtung des Kolbens beziehungsweise des Gegenstandes bestimmbar ist.

Durch die Erfindung wird daher eine richtungsempfindliche, genaue Positionsmessanordnung zur Verfügung gestellt, die darüber hinaus auch die Möglichkeit eröffnet, die Geschwindigkeit und sogar die Beschleunigung des Gegenstandes positionsbezogen bezüglich des Sensors zu ermitteln.

## Patentansprüche

1. Arbeitszylinder, der als Hubzylinder vorgesehen ist, mit einer
Messanordnung
wobei sich ein Magnet aufgrund der Bewegung oder Stellung eines Gegenstandes (2) in einem druckbeaufschlagten Raum bewegt oder positioniert
und diese Bewegung beziehungsweise Positionierung des Magneten von einem Sensor erfasst wird,
wobei zwischen dem Gegenstand (2) und dem Magnet ein mechanischer Wandler angeordnet ist
**dadurch gekennzeichnet, dass**
der mechanische Wandler als Seilzuganordnung mit einer Spannvorrichtung für ein Seil ausgebildet ist
und zwischen Magnet und Sensor eine nichtmagnetische druckdichte Trennwand vorgesehen ist
und die Messanordnung (1), mit Ausnahme des Sensors im Inneren des druckbeaufschlagten Raumes (30) des Arbeitszylinders (3) angeordnet ist
und die Trennwand (33) Teil des Zylinders des Arbeitszylinders (3) ist.

2. Arbeitszylinder nach Anspruch 1, **dadurch gekennzeichnet, dass** die Messanordnung (1) zum Messen einer Länge, einer Distanz oder eines Abstandes dient und/oder zur Messung der Stellung des Magneten (10) induktive oder magnetische Näherungsschalter und dergleichen vorgesehen sind.

3. Arbeitszylinder nach einem oder beiden der vorhergehenden Ansprüche, **gekennzeichnet durch** einen magnetfeldrichtungsempfindlichen Sensor (11), insbesondere einem Hall-Sensor.

4. Arbeitszylindernach einem oder mehreren der vorhergehenden Ansprüche, **dadurch gekennzeichnet, dass** der Sensor (11) als diskretes Bauteil auf der am Magneten (10) abgewandten Seite der Trennwand (33) angeordnet ist und/oder der Sensor (11) in Dünnschichttechnologie ausgebildet ist und auf der am Magneten abgewandten Seite der Trennwand angeordnet ist.

5. Arbeitszylinder nach einem oder mehreren der vorhergehenden Ansprüche, **gekennzeichnet durch** eine Dreh- oder Linearbewegung des Magneten (10) und/oder ein Umlenkelement, insbesondere eine Umlenkrolle (42) für das Seil (40) [und/oder eine Spannvorrichtung für das Seil (40)].

6. Arbeitszylinder nach einem oder mehreren der vorhergehenden Ansprüche, **dadurch gekennzeichnet, dass** der mechanische Wandler als Getriebe (4), als Über- oder Untersetzungsgetriebe, als Flaschenzug, als Umlenkanordnung, als Teleskopstange, als Hebelanordnung beziehungsweise als Kombination mehrerer der vorgenannten Mittel ausgebildet ist und ein Ende des Seiles (40) der Seilzuganordnung mit dem Gegenstand (2), dessen Lage zu bestimmen ist, verbunden ist und das zweite Seilende den Magnet (10) bewegt beziehungsweise positioniert.

7. Arbeitszylinder nach Anspruch 6, **dadurch gekennzeichnet, dass** das Getriebe (4) eine Welle (41) aufweist, auf welcher das zweite Seilende aufliegt und auf- beziehungsweise abrollt und/oder die Achse (A) der Welle (41) parallel, winklig oder rechtwinklig zur Bewegungsrichtung des Gegenstandes orientiert ist.

8. Arbeitszylinder nach Anspruch 6 oder 7, **dadurch gekennzeichnet, dass** die Welle (41) den Magneten (10) in eine Drehbewegung versetzt und/oder der zu messende Hub (h) mittels des Getriebes (4) weniger als eine ganze Umdrehung des Magneten (10) erzeugt und dadurch jederzeit eine eindeutige Zuordnung zwischen Magnetorientierung, insbesondere Magnetfeldrichtung und Position des Gegenstandes gegeben ist und/oder der zu messende Hub (h) mittels des Getriebes (4) mehrere Umdrehungen des Magneten erzeugt, dass mit dem Sensor (11) die Anzahl und Richtung der Umdrehungen erfasst werden und dadurch die Position des Gegenstandes durch Zählen erfasst werden kann.

9. Arbeitszylinder nach Anspruch 8, **dadurch gekennzeichnet, dass** die Magnetorientierung, insbesondere Magnetfeldrichtung innerhalb einer Umdrehung zusätzlich ausgewertet wird und dadurch Zwischenwerte für die durch Zählen von Umdrehungen bestimmten Gegenstandspositionen erfasst werden können und/oder die Messanordnung ein Gewinde trägt und/oder das Getriebe (4) mehrere gekoppelte Achsen aufweist, die für den zu messenden Hub (h) jeweils eine vorzugsweise deutlich unterschiedliche Anzahl von Umdrehungen aufweisen und die jeweils einen Magneten (10',10", 10‴) bewegen, dessen Position, Bewegung und/oder Magnetfeldrichtung wiederum mit jeweils einem Sensor (11', 11", 11‴) erfassbar ist und deren gemeinsame Auswertung unter Kenntnis der Getriebestufen zu einer höheren Auflösung des zu messenden Hubes (h) führt.

10. Arbeitszylinder nach einem oder mehreren der vorhergehenden Ansprüche, **dadurch gekennzeichnet, dass** zum Messen der Position des Kolbens in einem Arbeitszylinder (3), bestehend aus einem mechanischen Wandler, insbesondere einem Getriebe (4) im Inneren des druckbeaufschlagten Raumes (30), der eine Änderung der Position der Kolbens (2) im Arbeitszylinder (3) in die Drehbewegung eines Magneten (10) umsetzt, eines außerhalb des druckbeaufschlagten Raumes (30) befindlichen, insbesondere magnetfeldrichtungsempfindlichen Sensors (11) und einer nicht magnetisierbaren, druckfesten Trennwand (33) zwischen Magnet (10) und Sensor (11), wobei Magnet (10), Trennwand (33) und Sensor (11) so angeordnet sind, dass die Drehbewegung des Magnets (10) innerhalb des druckbeaufschlagten Raumes (30) vom Sensor (11) außerhalb des druckbeaufschlagten Raumes (30) erfassbar ist.

11. Arbeitszylinder nach einem der vorhergehenden Ansprüche, **dadurch gekennzeichnet, dass** der Arbeitszylinder (3) als hydraulisch oder pneumatisch wirkender Arbeitszylinder (3) ausgebildet ist.

12. Arbeitszylinder nach einem der vorhergehenden Ansprüche , **dadurch gekennzeichnet, dass** die Trennwand einstückig mit dem Zylinder ausgebildet ist und/oder die Trennwand (33) im Zylinderboden (34) angeordnet ist.

13. Arbeitszylinder nach einem der vorhergehenden Ansprüche , **dadurch gekennzeichnet, dass** die Trennwand (33) in der Zylinderwand (36) angeordnet ist und/oder der Arbeitszylinder eine Bohrung, insbesondere mit Gewinde zur Aufnahme der Messanordnung aufweist.

14. Arbeitszylinder nach einem der vorhergehenden Ansprüche , **dadurch gekennzeichnet, dass** eine Umlenkrolle (42) für das Seil (40) im Inneren des Arbeitszylinders an dem der Kolbenstange abgewandten Ende des Arbeitszylinders vorgesehen ist.

## Claims

1. Measuring arrangement, wherein a magnet moves or positions itself in a pressurized space due to the movement or position of an object (2), the space is pressurized, and this movement or positioning of the magnet is detected by a sensor, wherein a mechanical transducer is arranged between the object (2) and the magnet, and the magnet executes a rotary movement, **characterized in in that** the mechanical transducer is designed as a rope pull arrangement with a tensioning device for a rope and a non-magnetic pressure-tight partition is provided between the magnet and the sensor, the sensor being designed as a sensor (11) which is sensitive to the direction of the magnetic field and the rotary movement of the magnet causing a change in the magnetic field with respect to the position of the sensor (11) which is sensitive to the direction of the magnetic field, the sensor being arranged outside the pressurized space.

2. Measuring arrangement according to claim 1, **characterized in that** the measuring arrangement (1) serves to measure a length, a distance or a spacing and/or **in that** inductive or magnetic proximity switches and the like are provided for measuring the position of the magnet (10).

3. Measuring arrangement according to one or more of the preceding claims, **characterized in that** the sensor (11) is arranged as a discrete component on the side of the partition (33) facing away from the magnet (10) and/or **in that** the sensor (11) is formed in thin-film technology and is arranged on the side of the partition facing away from the magnet.

4. Measuring arrangement according to one or both preceding claims, **characterized by** a rotary movement of the magnet (10) and/or a deflection element, in particular a deflection pulley (42) for the rope (40) [and/or a tensioning device for the rope (40)].

5. Measuring arrangement according to one or more of the preceding claims, **characterized in that** the mechanical transducer is designed as a gear (4), as a step-up or step-down gear, as a pulley block, as a deflection arrangement, as a telescopic rod, as a lever arrangement or as a combination of several of the aforementioned means, and one end of the rope (40) of the rope pull arrangement is connected to the object (2) whose position is to be determined, and the second rope end moves or positions the magnet (10).

6. Measuring arrangement according to claim 5, **characterized in that** the gear (4) has a shaft (41) on which the second rope end rests and rolls up or down and/or the axis (A) of the shaft (41) is oriented parallel, at an angle or orthogonal to the direction of movement of the object.

7. Measuring arrangement according to one or more of the preceding claims, **characterized in that** the shaft (41) sets the magnet (10) in a rotational movement and/or the stroke (h) to be measured by means of the gear (4) produces less than one complete revolution of the magnet (10) and thereby at any time the magnet orientation, in particular magnetic field direction and position of the object are unambiguously assigned to each other and/or the stroke (h) to be measured generates several revolutions of the magnet by means of the gear (4), **in that** the number and direction of the revolutions are detected with the sensor (11) and the position of the object can thereby be detected by counting.

8. Measuring arrangement according to claim 7, **characterized in that** the magnet orientation, in particular magnetic field direction within one revolution is additionally evaluated and thereby intermediate values for the object positions determined by counting revolutions can be detected and/or the measuring arrangement carries a thread and/or the gear (4) has several coupled axes, which each have a preferably significantly different number of revolutions for the stroke (h) to be measured and which each move a magnet (10', 10", 10‴), the position, movement and/or magnetic field direction of which can in turn be detected by a sensor (11', 11", 11‴) in each case and the joint evaluation of which, with knowledge of the gear stages, leads to a higher resolution of the stroke (h) to be measured.

9. Measuring arrangement according to one or more of the preceding claims, **characterized in that**, for measuring the position of the piston in a working cylinder (3), consisting of a mechanical transducer, in particular a gear (4) inside the pressurized space (30), which converts a change in the position of the piston (2) in the working cylinder (3) into the rotary movement of a magnet (10), of a sensor (11) which is located outside the pressurized space (30) and is sensitive in particular to the direction of the magnetic field, and of a non-magnetizable, pressure-resistant partition (33) between the magnet (10) and the sensor (11), the magnet (10), partition (33) and sensor (11) being arranged in such a way that the rotational movement of the magnet (10) inside the pressurized space (30) can be detected by the sensor (11) outside the pressurized space (30).

10. Working cylinder, which is provided as a lifting cylinder, with a measuring arrangement according to one or more of the preceding claims.

11. Working cylinder according to claim 10, **characterized in that** the working cylinder (3) is designed as a hydraulically or pneumatically acting working cylinder (3) and/or the measuring arrangement (1), except for the sensor, is arranged inside the pressurizable space (30) of the working cylinder (3).

12. Working cylinder according to one or both preceding claims 10 to 11, **characterized in that** the partition (33) is part of the cylinder of the working cylinder (3) and/or the partition is formed integrally with the cylinder and/or the partition (33) is arranged in the cylinder base (34).

13. Working cylinder according to one or more of the preceding claims 10 to 12, **characterized in that** the partition wall (33) is arranged in the cylinder wall (36) and/or the working cylinder has a bore, in particular with a thread, for receiving the measuring arrangement.

14. Working cylinder according to one or more of the preceding claims 10 to 13, **characterized in that** a deflection pulley (42) for the rope (40) is provided inside the working cylinder at the end of the working cylinder facing away from the piston rod.

## Revendications

1. Dispositif de mesure, dans lequel un aimant se déplace ou se positionne en raison du mouvement ou de la position d'un objet (2) dans un espace soumis à une pression, l'espace étant soumis à une pression, et ce mouvement ou ce positionnement de l'aimant étant détecté par un capteur, un transducteur mécanique étant disposé entre l'objet (2) et l'aimant et l'aimant exécutant un mouvement de rotation, **caractérisé en ce que** le transducteur mécanique est réalisé sous la forme d'un dispositif de traction à câble avec un dispositif de tension pour un câble et **en ce qu'**une paroi de séparation non magnétique et étanche à la pression est prévue entre l'aimant et le capteur, le capteur étant réalisé sous la forme d'un capteur (11) sensible à la direction du champ magnétique et le mouvement de rotation de l'aimant provoquant une modification du champ magnétique par rapport à la position du capteur (11) sensible à la direction du champ magnétique et le capteur étant disposé à l'extérieur de l'espace soumis à la pression.

2. Dispositif de mesure selon la revendication 1, **caractérisé en ce que** le dispositif de mesure (1) sert à mesurer une longueur, une distance ou un écart et/ou **en ce que** des détecteurs de proximité inductifs ou magnétiques et similaires sont prévus pour mesurer la position de l'aimant (10).

3. Dispositif de mesure selon une ou plusieurs des revendications précédentes, **caractérisé en ce que** le capteur (11) est disposé en tant que composant discret sur le côté de la paroi de séparation (33) opposé à l'aimant (10) et/ou le capteur (11) est réalisé en technologie à couche mince et est disposé sur le côté de la paroi de séparation opposé à l'aimant.

4. Dispositif de mesure selon l'une des revendications précédentes ou les deux, **caractérisé par** un mouvement de rotation de l'aimant (10) et/ou un élément de renvoi, en particulier une poulie de renvoi (42) pour le câble (40) [et/ou un dispositif de tension pour le câble (40)].

5. Dispositif de mesure selon l'une ou plusieurs des revendications précédentes, **caractérisé en ce que** le transducteur mécanique est conçu comme un engrenage (4), un réducteur ou un multiplicateur, un palan, un dispositif de renvoi, une tige télescopique, un dispositif à levier ou une combinaison de plusieurs des moyens précités, et **en ce qu'**une extrémité du câble (40) du dispositif de traction à câble est reliée à l'objet (2) dont la position doit être déterminée, et la deuxième extrémité du câble déplace ou positionne l'aimant (10).

6. Dispositif de mesure selon la revendication 5, **caractérisé en ce que** le mécanisme (4) présente un arbre (41) sur lequel la deuxième extrémité du câble repose et s'enroule ou se déroule et/ou l'axe (A) de l'arbre (41) est orienté parallèlement, angulairement ou perpendiculairement à la direction de déplacement de l'objet.

7. Dispositif de mesure selon une ou plusieurs des revendications précédentes, **caractérisé en ce que** l'arbre (41) entraîne l'aimant (10) dans un mouvement de rotation et/ou la course à mesurer (h) génère moins d'un tour complet de l'aimant (10) au moyen de l'engrenage (4), ce qui permet d'établir à tout moment une correspondance claire entre l'orientation de l'aimant, en particulier la direction du champ magnétique et la position de l'objet et/ou la course à mesurer (h) génère plusieurs rotations de l'aimant au moyen de l'engrenage (4), **en ce que** le nombre et la direction des rotations sont détectés par le capteur (11) et que la position de l'objet peut ainsi être détectée par comptage.

8. Dispositif de mesure selon la revendication 7, **caractérisé en ce que** l'orientation de l'aimant, en particulier la direction du champ magnétique, est évaluée en plus à l'intérieur d'une rotation et qu'il est ainsi possible de saisir des valeurs intermédiaires pour les positions de l'objet déterminées par comptage des rotations et/ou que le dispositif de mesure porte un filetage et/ou que le mécanisme (4) présente plusieurs axes couplés, qui présentent chacun un nombre de rotations de préférence nettement différent pour la course (h) à mesurer et qui déplacent chacun un aimant (10', 10", 10‴) dont la position, le mouvement et/ou la direction du champ magnétique peuvent à leur tour être détectés par un capteur (11', 11", 11‴) respectif et dont l'évaluation commune, en connaissant les étages de la transmission, conduit à une résolution plus élevée de la course (h) à mesurer.

9. Dispositif de mesure selon une ou plusieurs des revendications précédentes, **caractérisé en ce que**, pour mesurer la position du piston dans un cylindre de travail (3), composé d'un convertisseur mécanique, en particulier d'un engrenage (4) à l'intérieur de la chambre sous pression (30), qui transforme une modification de la position du piston (2) dans le cylindre de travail (3) en mouvement de rotation d'un aimant (10), d'un capteur (11) situé à l'extérieur de l'espace (30) soumis à la pression, en particulier sensible à la direction du champ magnétique, et d'une paroi de séparation (33) non magnétisable et résistante à la pression entre l'aimant (10) et le capteur (11), l'aimant (10), la paroi de séparation (33) et le capteur (11) étant disposés de telle sorte que le mouvement de rotation de l'aimant (10) à l'intérieur de l'espace (30) soumis à la pression peut être détecté par le capteur (11) à l'extérieur de l'espace (30) soumis à la pression.

10. Vérin de travail prévu comme vérin de levage, avec un dispositif de mesure selon une ou plusieurs des revendications précédentes.

11. Vérin de travail selon la revendication 10, **caractérisé en ce que** le vérin de travail (3) est conçu comme un vérin de travail (3) à action hydraulique ou pneumatique et/ou **en ce que** le dispositif de mesure (1), à l'exception du capteur, est disposé à l'intérieur de l'espace (30) du vérin de travail (3) pouvant être mis sous pression.

12. Vérin de travail selon l'une ou les deux revendications précédentes 10 à 11, **caractérisé en ce que** la paroi de séparation (33) fait partie du cylindre du vérin de travail (3) et/ou la paroi de séparation est réalisée d'une seule pièce avec le cylindre et/ou la paroi de séparation (33) est disposée dans le fond du cylindre (34).

13. Vérin de travail selon une ou plusieurs des revendications précédentes 10 à 12, **caractérisé en ce que** la paroi de séparation (33) est disposée dans la paroi (36) du vérin et/ou le vérin de travail comporte un alésage, notamment fileté, destiné à recevoir le dispositif de mesure.

14. Vérin de travail selon l'une ou plusieurs des revendications précédentes 10 à 13, **caractérisé en ce qu'**une poulie de renvoi (42) pour le câble (40) est prévue à l'intérieur du vérin de travail à l'extrémité du vérin de travail opposée à la tige de piston.
